# EUROPEAN PATENT APPLICATION

(11) **EP 1 001 641 A2**
(43) Date of publication of application: **17.05.2000**
(21) Application number: 99308677.6
(22) Date of filing: 02.11.1999
(51) Int. Cl.: H04Q 7/38

(54) **Secure method for generating cryptographic function outputs**

(30) Priority: 09.11.1998 US 188816
(71) Applicant: LUCENT TECHNOLOGIES INC., Murray Hill, New Jersey 07974-0636 (US)
(72) Inventor: Berenzweig, Adam L., New York, New York 10003 (US); Brathwaite, Carlos Enrique, Orangeny, New Jersey 07050 (US)
(74) Representative: Buckley, Christopher Simon Thirsk

(57) **Abstract**

Data that indicates the use of a pseudorandom function output is used to modify at least one value used to produce the pseudorandom function output. In one embodiment, the output control signals provided to a User Identity Module (UIM) device are used as inputs to a pseudorandom function processor. As a result, the output provided by the processor differs based on whether the output from the processor is going to be stored in a key storage area or exported for use outside the UIM. This technique solves the problem of the prior art by insuring that values that are exported or presented at the output of UIM module, are different than the values that are stored within the UIM module as key values. As a result, an attacker would receive values at the output of the UIM that are different than the values stored in the key storage unit and therefore, would not be able to impersonate the mobile terminal or compromise the privacy of the terminal's communications.

## Description

### Background of the Invention

### Field of the Invention

The present invention relates to communications; more specifically, the security of the authentication process used in communication systems.

### Description of the Related Art

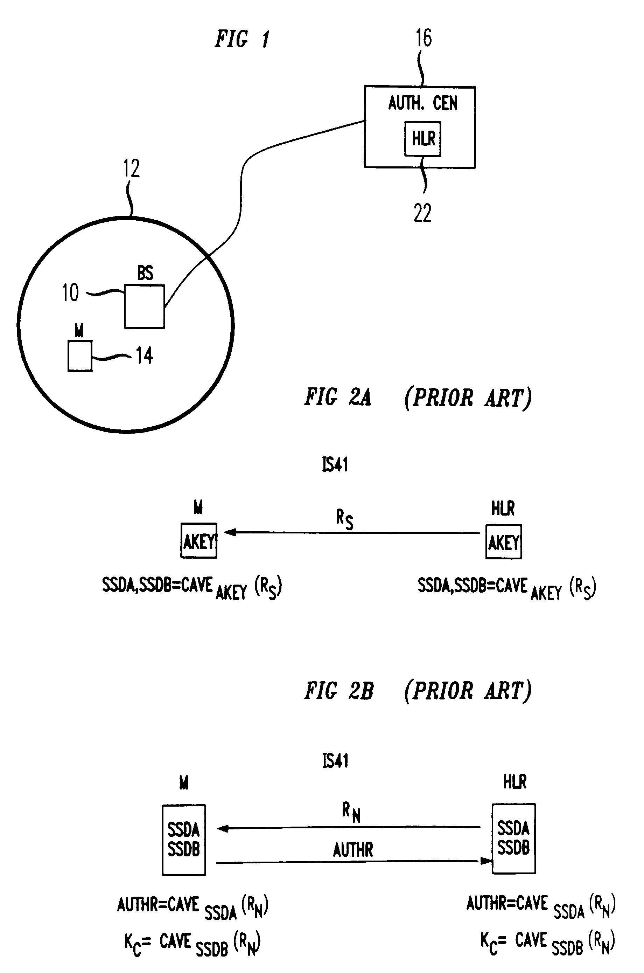

FIG. 1 illustrates a base station 10, its associated cell 12 and mobile 14 within cell 12. When mobile 14 first registers or attempts communications with base station 10, base station 10 authenticates or verifies the mobile's identity before allowing the mobile access to the communication network. The authentication of mobile 14 involves communicating with authentication center 16. Authentication center 16 then accesses a home location register 22 which is associated with mobile 14. Home location register 22 may be associated with the terminal or mobile by an identifier such as the mobile's telephone number. The information contained in the home location register is used to generate encryption keys and other information. This information is used to supply base station 10 with information that is transmitted to mobile 14 so that mobile 14 can respond and thereby be authenticated as a mobile that is entitled to receive communication services.

FIGS. 2a and 2b illustrate the authentication process used for an IS41 compliant network. IS41 compliant networks are networks that use, for example, AMPS, TDMA or CDMA protocols. In this system, both the mobile and home location register contain a secret value called AKEY. Before the actual authentication process can start, a key update is performed by providing the mobile with keys that will be used with encryption functions for authentication and communication. The AKEY value stored in the home location register associated with the mobile is used to produce the keys. The keys values calculated are the SSDA (Shared Secret Data A) and SSDB (Shared Secret Data B) values. These values are calculated by performing the CAVE algorithm or function using a random number R_{S} as an input and the value AKEY as the key input. The CAVE algorithm is well known in the art and is specified in the IS41 standard. The network then updates the key values SSDA and SSDB that will be used by the mobile by transmitting R_{S} to the mobile. The mobile then calculates SSDA and SSDB in the same fashion as calculated by the authentication center. Now that the mobile and home location register both contain the SSDA and SSDB values, the authentication process may take place.

FIG. 2b illustrates how a mobile is authenticated to a network after both the mobile and home location register have received the keys SSDA and SSDB. The authentication center challenges the mobile by sending a random number R_{N} to the mobile. At this point both the mobile and authentication center calculate the value AUTHR, where AUTHR is equal to the output of the CAVE algorithm using the random number R_{N} as an input and the SSDA value as the key input. The mobile then transmits the calculated value AUTHR to the authentication center. The authentication center compares its calculated value of AUTHR and the value received from the mobile. If the values match, the mobile is authenticated and it is given access to the network. In addition, both the mobile and the authentication center calculate the value of cipher key K_{C} where the value K_{C} is equal to the output of the CAVE algorithm using the value R_{N} as an input and the value SSDB as the key input. At this point, communications between the mobile and network are permitted and may be encrypted using an cryptographic function where the inputs are the message to be encrypted and the key value is K_{C}.

Since the values SSDA and SSDB are used to verify or authenticate the mobile terminal's identify, it is important that an imposter mobile terminal does not obtain these values. Additionally, the key value K_{C} is used for encrypting communications with the mobile terminal and if this value is obtained by an outsider, the privacy of the communications may be compromised.

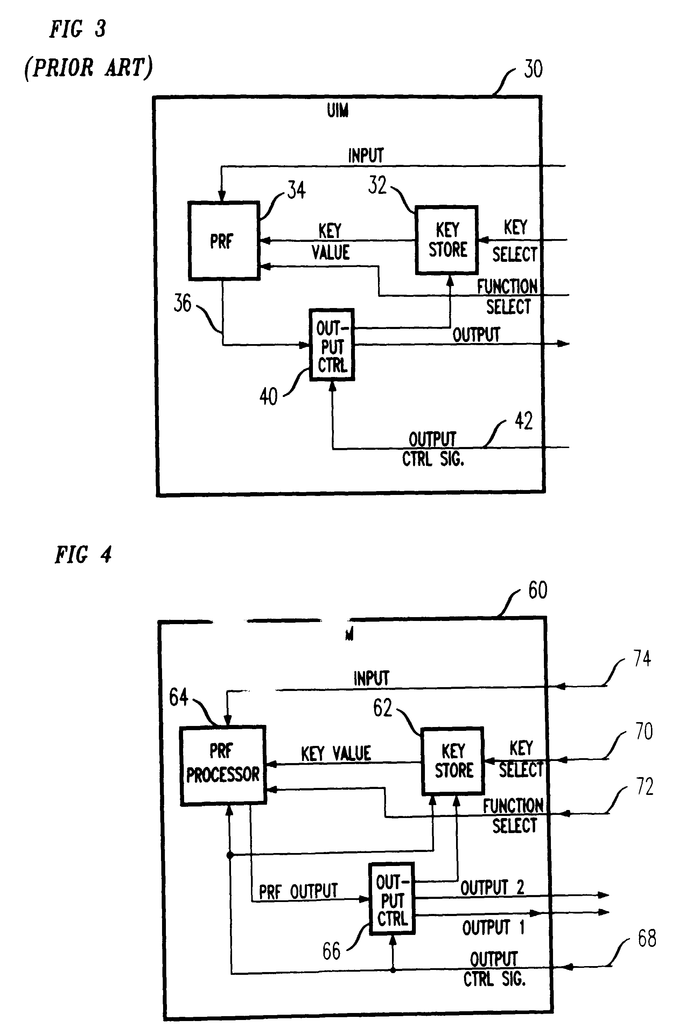

FIG. 3 is a function block diagram of a user identity module or smart card that is typically used in communication devices. User identity module (UIM) 30 contains a key value storage memory 32 which is preferably a nonvolatile memory. Pseudorandom function (PRF) unit 34 contains a processor that executes psuedorandom functions such as cryptographic functions and one-way cryptographic functions or hash functions. Pseudorandom function unit 34 is used to generate an output on line 36 based on a key values provided by key storage unit 32, an input value received from an input to UIM 30 and a function select provided to UIM 30. The key value provided to PRF unit 34 is based on a key select input provided to UIM 30. PRF unit 34 selects a psuedorandom function to execute based on the function select input, and uses the input and key values as inputs to the selected pseudorandom function to produce an output on line 36. The output on line 36 is provided to either key storage area 32 where it is stored as a key value, or to the UIM output for export and use by the communication terminal containing UIM 30. The determination of whether to provide the outputs on line 36 to key store unit 32 or to the output of UIM 30 is made by output controller 40 based on an input received on line 42. This configuration is susceptible to an attack where an outsider provides UIM 30 with the inputs necessary to generate the values SSDA, SSDB or K_{C} while manipulating the values at input 42 so that the values SSDA, SSDB or K_{C} can be diverted to the output of the UIM rather than to key storage 32.

### Summary of the Invention

The present invention solves the aforementioned problem by using data that indicates the use of a pseudorandom function output to modify at least one value used to produce the pseudorandom function output. In one embodiment, the output control signals provided to a UIM device are used as inputs to a psuedorandom function processor. As a result, the output provided by the processor differs based on whether the output from the processor is gong to be stored in a key storage area or exported for use outside the UIM. This technique solves the problem of the prior art by insuring that values that are exported or presented at the output of UIM module, are different than the values that are stored within the UIM module as key values. As a result, an attacker would receive values at the output of the UIM that are different than the values stored in the key storage unit and therefore, would not be able to impersonate the mobile terminal or compromise the privacy of the terminal's communications.

### Brief Description of the Drawings

FIG. 1 illustrates the communication between a mobile and authentication center;
FIGS. 2a and 2b illustrate the key update and authentication process for an IS41 compliant network;
FIG. 3 illustrates a functional block diagram of a user identity module;
FIG. 4 illustrates a functional block diagram of a user identity module where the output control changes the values produced by a psuedorandom function processor; and
FIG. 5 illustrates how data indicative of the use of a pseudorandom function output is used to modify a value used to produce the pseudorandom function output.

### Detailed Description of the Invention

FIG. 4 illustrates a block diagram of a user identity module (UIM) 60 containing a key storage element 62, a psuedorandom function (PRF) processor 64 and an output controller 66. UIM module 60 may be fabricated on a single silicon device or in a sealed package. Key store device 62 may be implemented using a nonvolatile memory such as an electrically erasable programmable read only memory (EEPROM). Psuedorandom function processor 64 may be implemented using a microprocessor or microcomputer that executes a program that implements one or more psuedorandom functions. The psuedorandom functions may be implemented in terms of an algorithm or a combination of an algorithm and a look-up table. Psuedorandom functions may be functions such as cryptographic functions and/or one-way cryptographic functions such as hash functions. The pseudorandom functions may also be any of the well known pseudorandom functions specified in telecommunication standards such as IS41 or GSM. Processors that produce an output from a psuedorandom function are well known in the art and are used in many mobile communication terminals. Output controller 66 may be a switch or multiplexer that provides the output from PRF processor to key storage unit 62 for storage or to the output of UIM 60 for export based on signals provided on input 68. The control signals received on input 68 are also provided as an input to pseudorandom function processor 64 where the signals may be used to modify values that are used to produce a pseudorandom function output Key storage unit 62 provides a key value to PRF processor 64 based on inputs received on input 70. The output control signals may also be provided as an input to key storage unit 62 and used to modify the identifier or pointer used to select the key value supplied to PRF processor 64.

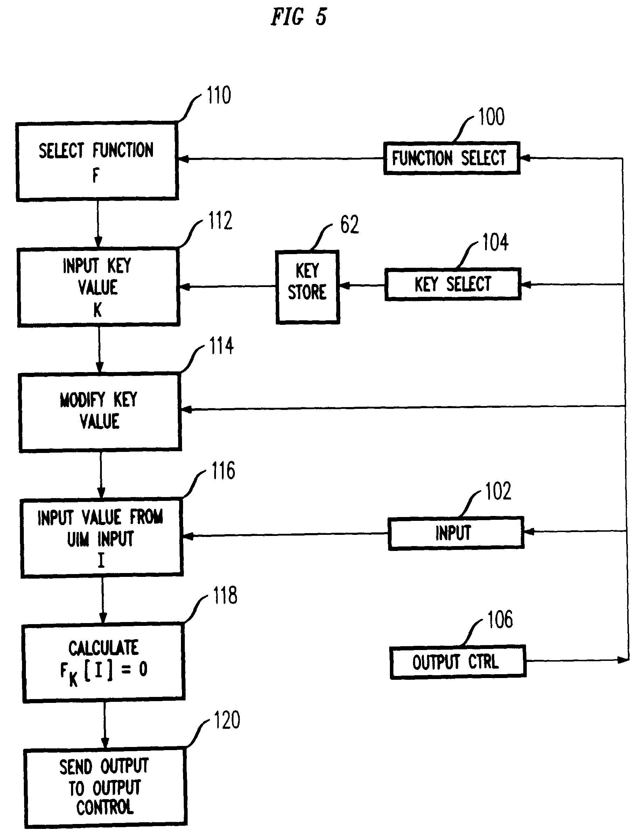

FIG. 5 illustrates the process by which PRF processor 64 produces an output. The pseudorandom random function identifier data or value from function select input 72 is illustrated by bit field 100, the input data or value from input 74 is illustrated as bit field 102, the key pointer data or value from input 70 is illustrated as bit field 104 and the output control data or value from input 68 is illustrated as bit field 106. Output control field 106 may be used to modify the output produced by PRF processor 64 in several ways. For example, one or more bits of output control field 106 may be used to modify the bits in key select field 104 which is used as a pointer to key values in key storage 62. It is also possible for one or more bits of output control filed 106 to modify input field 102 or modify function select field 100. The modification may include an arithmetic or logic operation, or a simple concatenation of bits.

PRF processor 64 selects a pseudorandom function F in step 110. This selection is based on bit field 100 which may be modified as discussed earlier using one or more bits from output control field 106. In step 112, PRF processor 64 inputs a key value from key storage unit 62. The pointer which identified the key value for step 112 may be modified using one or more bits of output control field 106. It is also possible for processor 64 to execute step 114 and to modify the key value received from key storage 62 using one or more bits from output control field 106. As discussed above, the modification may involve an arithmetic or logic operation, or a simple concatenation of bits. In step 116, PRF processor 64 inputs the values from input filed 102. This field may also be modified using one or more bits from output control field 106. In step 118, PRF processor 64 executes the pseudorandom function using the key value K and the input value I to produce an output which is then sent to output control unit 66 in step 120.

## Claims

1. A method for producing an output using a pseudorandom function, comprising the steps of:
receiving a value used as an input to produce a pseudorandom function output;
modifying the value based on a use of the pseudorandom function output to produce a modified value; and
producing a pseudorandom function output using the modified value.

2. The method of claim 1, wherein the value identifies a key value to be used as an input to the pseudorandom function.

3. The method of claim 1, wherein the value is a key value to be used as an input to the pseudorandom function.

4. The method of claim 1, wherein the value identifies one of a plurality of pseudorandom functions.

5. The method of claim 1, further comprising the step of receiving data indicating that the output of the pseudorandom function is to be stored.

6. The method of claim 1, further comprising the step of receiving data indicating that the output of the pseudorandom function is to be stored as a key value.

7. The method of claim 1, further comprising the step of receiving data indicating that the output of the pseudorandom function is to be exported.

8. A method for producing an output using a pseudorandom function, comprising the steps of:
receiving data, where the data indicates a use of a pseudorandom function output, and where the data comprises at least one of an input value, a key value, a key pointer value and a pseudorandom function identifier value;
modifying at least one of the input value, the key value, the key pointer value and the pseudorandom function identifier value, based on the use of the pseudorandom function output to produce at least one modified value; and
producing a pseudorandom function output using at least one modified value.

9. The method of claim 8, wherein the data indicates that the output of the pseudorandom function is to be stored.

10. The method of claim 8, wherein the data indicates that the output of the pseudorandom function is to be stored as a key.

11. The method of claim 8, wherein the data indicates that the output of the pseudorandom function is to be exported.
